# EUROPEAN PATENT APPLICATION

(11) **EP 4 024 611 A1**
(43) Date of publication of application: **06.07.2022**
(21) Application number: 20859483.8
(22) Date of filing: 18.06.2020
(51) Int. Cl.: H01Q 1/42, G01S 7/03, G01S 13/931

(54) **RADAR DEVICE**

(30) Priority: 29.08.2019 JP 2019156929
(71) Applicant: Hitachi Astemo, Ltd., Ibaraki 312-8503 (JP)
(72) Inventor: CHUJO, Norio, Tokyo 100-8280 (JP); MATSUMURA, Takafumi, Ibaraki 312-8503 (JP)
(74) Representative: Mewburn Ellis LLP
(86) International application number: PCT/JP2020/024043
(87) International publication number: WO 2021/039050

(57) **Abstract**

A radar device, mounted on a vehicle, includes: a transmission antenna that radiates a radio wave toward an object; a reception antenna that receives a reflected wave of the radio wave radiated from the transmission antenna and reflected by the object; an antenna substrate that has a mounting face on which the transmission antenna and the reception antenna are mounted; and a radome that covers the transmission antenna and the reception antenna. The radome is arranged between a bumper of the vehicle and the antenna substrate. A first face of the radome opposing the antenna substrate and a second face of the radome opposing the bumper have portions that are not parallel to each other. The transmission antenna radiates the radio wave at an angle inclined from a direction perpendicular to the mounting face.

## Description

### Technical Field

The present invention relates to a radar device.

### Background Art

In recent years, radar devices that detect the surroundings of automobiles have been adopted in order to support drivers and realize automatic driving. Such radar devices generally emit radio waves from a transmission antenna, receive the radio waves reflected by a target by a reception antenna provided separately from the transmission antenna, and calculates a position and a speed of the target.

The radar devices for automobiles are generally installed inside bumpers provided on the front and rear of a vehicle body. Therefore, the radio waves emitted from the transmission antenna are reflected by the bumper and returned to the radar side, and are further reflected by a cover (radome) installed to protect the antenna or an antenna substrate, so that the radio waves emitted from the transmission antenna and the reflected waves may interfere with each other. This causes a disorder in an antenna gain pattern, which leads to a problem that detection performance of the target in the radar device deteriorates.

As a background art related to the above, for example, the following PTL 1 is known. PTL 1 discloses a technique in which a first face, which is a face on a side opposing a transmitting antenna section and a receiving antenna section, and a second face on the opposite side, are not parallel in a cover member provided in a radar device so that the influence of interference due to noise of reflected waves is reduced.

### Citation List

### Patent Literature

PTL 1: JP 2016-125883 A

### Summary of Invention

### Technical Problem

In the technique of PTL 1, a direction of a radio wave emitted to the front side of a vehicle through the cover member is not horizontal to the ground but has an angle corresponding to an inclination angle of the first face of the cover member, and thus, there is a problem that the detection performance deteriorates, such as the distance at which a target parallel to the ground can be detected becomes short. In addition, a radio wave emitted from the transmitting antenna section has a predetermined beam width and a side lobe, the radio wave after passing through the cover member contains a component perpendicular to the bumper. Therefore, there is also a problem that the detection performance deteriorates since this component is reflected by the bumper and reflected again on the second face, so that interference between the radio wave emitted from the transmission antenna and the reflected wave occurs.

### Solution to Problem

A radar device according to the present invention is mounted on a vehicle, and includes: a transmission antenna that radiates a radio wave toward an object; a reception antenna that receives a reflected wave of the radio wave radiated from the transmission antenna and reflected by the object; an antenna substrate that has a mounting face on which the transmission antenna and the reception antenna are mounted; and a radome that covers the transmission antenna and the reception antenna. The radome is arranged between a bumper of the vehicle and the antenna substrate. A first face of the radome opposing the antenna substrate and a second face of the radome opposing the bumper have portions that are not parallel to each other. The transmission antenna radiates the radio wave at an angle inclined from a direction perpendicular to the mounting face.

### Advantageous Effects of Invention

According to the present invention, it is possible to prevent interference between a radio wave emitted from a radar device and a reflected wave, and to avoid deterioration of detection performance.

### Brief Description of Drawings

[FIG. 1] FIG. 1 is a view illustrating a radar device according to a first embodiment of the present invention.
[FIG. 2] FIG. 2 is a view illustrating an example of mounting the radar device on an automobile.
[FIG. 3] FIG. 3 is a view illustrating a radar device according to a comparative example.
[FIG. 4] FIG. 4 is a view illustrating a modification of the radar device according to the first embodiment of the present invention.
[FIG. 5] FIG. 5 is a view illustrating a radar device according to a second embodiment of the present invention.
[FIG. 6] FIG. 6 is a view illustrating a modification of the radar device according to the second embodiment of the present invention.

### Description of Embodiments

Hereinafter, embodiments of the present invention will be described with reference to the drawings. The following description and drawings are examples given to describe the invention, and are appropriately omitted and simplified for clarification of the description. The present invention can be implemented in various other forms. Each component may be singular or plural unless specifically limited.

Positions, sizes, shapes, ranges, and the like of the respective components illustrated in the drawings do not always indicate actual positions, sizes, shapes, ranges and the like in order to facilitate understanding of the invention. Therefore, the present invention is not necessarily limited to the positions, sizes, shapes, ranges, and the like disclosed in the drawings.

When there is a plurality of components having the same or similar functions, the same reference sign will be sometimes described with different subscripts. When it is unnecessary to distinguish between the plurality of components, however, the subscripts will be sometimes omitted in the description.

Hereinafter, radar devices according to embodiments of the present invention will be described with reference to the drawings.

### (First Embodiment)

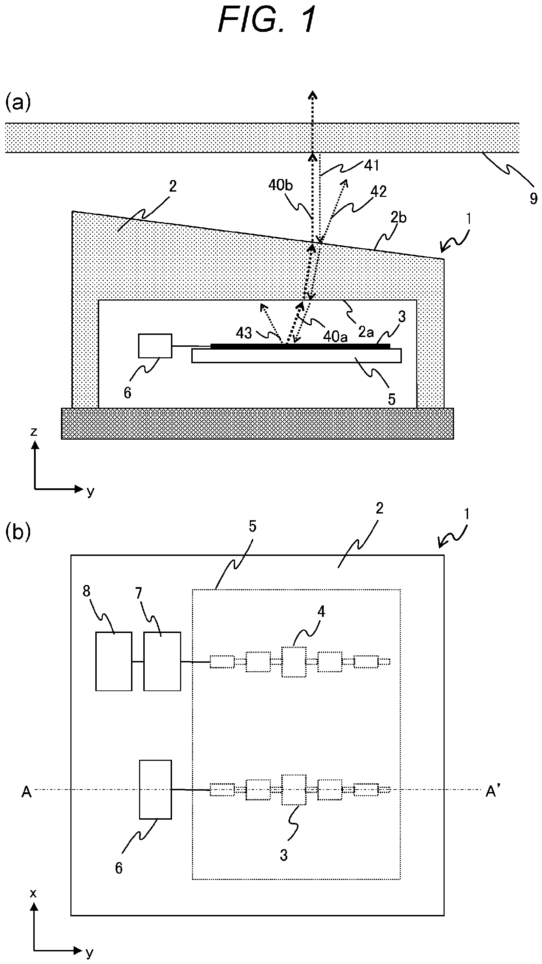

FIG. 1 is a view illustrating a radar device 1 according to a first embodiment of the present invention. FIG. 1(a) is a cross-sectional view taken along line A-A' of the radar device 1 according to the present embodiment, and FIG. 1(b) is a perspective plan view of the radar device 1 according to the present embodiment.

As illustrated in FIG. 1, a transmission antenna 3 and a reception antenna 4 are mounted on an antenna substrate 5 in the radar device 1 of the present embodiment. The transmission antenna 3 radiates a radio wave toward a target object, and the reception antenna 4 receives a reflected wave of the radio wave radiated from the transmission antenna 3 and reflected by the target object. As illustrated in FIG. 1(b), for example, each of the transmission antenna 3 and the reception antenna 4 is configured using an array antenna in which a plurality of antenna elements are arranged side by side in a straight line. Note that the transmission antenna 3 and the reception antenna 4 may be configured using an antenna other than the array antenna.

The transmission antenna 3 is connected with a transmission circuit 6 that sends a modulated signal to the transmission antenna 3 and radiates the radio wave to the transmission antenna 3. The reception antenna 4 is connected with a reception circuit 7 that amplifies and demodulates the reflected wave from the target received by the reception antenna 4 to generate a reception signal, and a signal processing circuit 8 that calculates a position and a speed of the target from the reception signal.

In addition, a cover (radome) 2 configured to protect the transmission antenna 3 and the reception antenna 4 is installed so as to cover these antennas in the radar device 1 of the present embodiment. The radome 2 is made of a material that transmits the radio wave, such as a resin. Note that FIG. 1(b) illustrates the transmission antenna 3, the reception antenna 4, and the antenna substrate 5 seen through a part of the radome 2 such that an internal structure of the radar device 1 can be understood.

In the present embodiment, the radome 2 is arranged between a bumper 9 of the vehicle on which the radar device 1 is mounted and the antenna substrate 5 of the radar device 1 as illustrated in FIG. 1(a). Note that a direction of a y-axis in FIGS. 1(a) and 1(b) corresponds to an up-down direction of the vehicle. In addition, directions of an x-axis and a z-axis correspond to directions horizontal to a road surface on which the vehicle is traveling. Here, the transmission antenna 3 and the reception antenna 4 are arranged side by side in the x-axis direction on a mounting face of the antenna substrate 5 as illustrated in FIG. 1(b). That is, the transmission antenna 3 and the reception antenna 4 are arranged side by side in the direction horizontal to the road surface on which the vehicle travels.

The radome 2 is a face (hereinafter referred to as "first face") 2a that is located inside a space in which the antenna substrate 5 is accommodated and opposes the antenna substrate 5, and a face (hereinafter referred to as "second face") 2b that is located outside the space in which the antenna substrate 5 is accommodated and opposes the bumper 9. The first face 2a is parallel to the y-axis and the second face 2b has an angle with respect to the y-axis. That is, the first face 2a is parallel to the mounting face of the antenna substrate 5 on which the transmission antenna 3 and the reception antenna 4 are mounted and a face of the bumper 9 on the radome 2 side, but the second face 2b is inclined with respect to these faces. Therefore, the first face 2a and the second face 2b are not parallel to each other.

As illustrated in FIG. 1(a), the transmission antenna 3 radiates the radio wave to be inclined from the z-axis corresponding to the direction perpendicular to the mounting face of the antenna substrate 5. A radiated radio wave 40a from the transmission antenna 3 is refracted at each of the first face 2a and the second face 2b, which are interfaces between the radome 2 and the air, at the time of passing through the radome 2 so that a propagation direction thereof changes. Then, the radio wave is emitted toward the target object as a transmission wave 40b from the radar device 1. In the present embodiment, it is preferable to provide a setting such that a gain of the reception antenna 4 is maximized at the same angle as an angle of the radiated radio wave 40a with respect to the z-axis in order to maximize the reception intensity of the reflected wave incident on the radar device 1 by the transmission wave 40b being reflected from the target object.

In the present embodiment, each of the angles of the first face 2a and the second face 2b is set such that the propagation direction of the transmission wave 40b from the radar device 1, which has been radiated from the transmission antenna 3 and passed through the radome 2, coincides with the z-axis direction. Note that the inclination angle of the second face 2b with respect to the mounting face of the antenna substrate 5 is set such that the propagation direction of the transmission wave 40b coincides with the z-axis direction in consideration of the angle of the radiated radio wave 40a from the transmission antenna 3 and a relative permittivity of the radome 2 at a frequency of the radiated radio wave 40a when the first face 2a is parallel to the mounting face of the antenna substrate 5 as illustrated in FIG. 1(a).

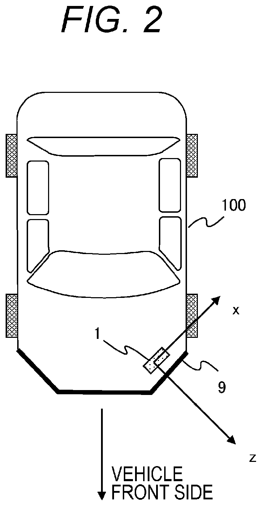

FIG. 2 is a view illustrating an example of mounting the radar device 1 on an automobile. The radar device 1 is mounted in order to detect an obstacle or the like existing in the left front of a vehicle 100, which is an automobile, at a position illustrated in FIG. 2, for example, with the z-axis directed to the left-diagonal forward direction of the vehicle 100. At this time, the radar device 1 is installed inside the bumper 9 in order to avoid contact with the obstacle and the influence of a rear-end collision.

Note that FIG. 2 illustrates an example of a mounting position of the radar device 1 in the vehicle 100, and the radar device 1 may be mounted at another position. In addition, a plurality of the radar devices 1 may be mounted at different positions in the vehicle 100.

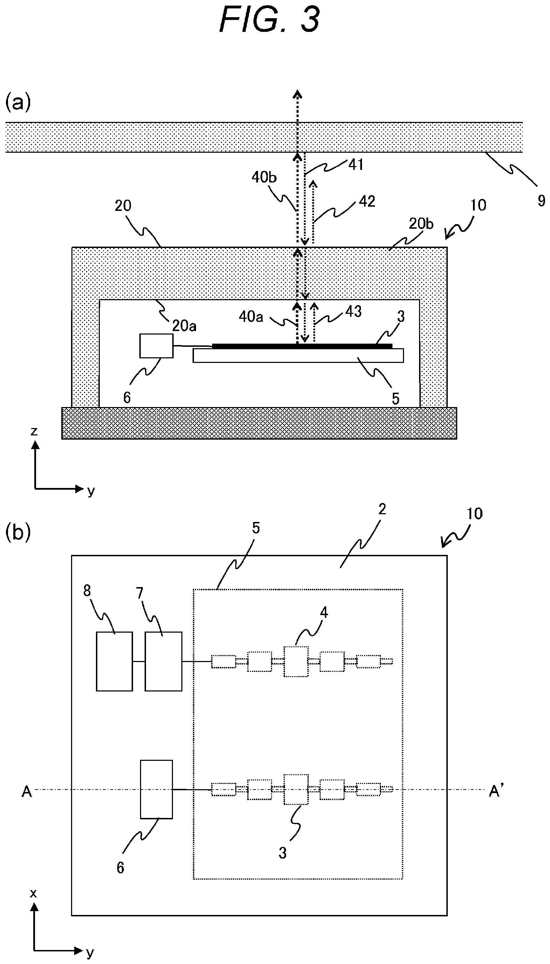

Next, an effect that the first face 2a and the second face 2b are not parallel to each other in the radome 2 will be described. FIG. 3 is a view illustrating a radar device 10 according to a comparative example. FIG. 3(a) is a cross-sectional view taken along line A-A' of the radar device 10 according to the comparative example, and FIG. 3(b) is a perspective plan view of the radar device 10 according to the comparative example. In the comparative example illustrated in FIG. 3, the radome 2 has a first face 20a that is located inside a space in which the antenna substrate 5 is accommodated and opposes the antenna substrate 5, and a second face 20b that is located outside the space in which the antenna substrate 5 is accommodated and opposes the bumper 9 in the radar device 10, and these faces are parallel to the antenna substrate 5. In addition, the transmission antenna 3 radiates a radio wave in the z-axis direction. The same structure as the radar device 1 illustrated in FIG. 1 is provided other than the above.

In the radar device 10 of the comparative example illustrated in FIG. 3, when the radiated radio wave 40a from the transmission antenna 3 passes through the radome 20 and is emitted in the z-axis direction as the transmission wave 40b from the radar device 1, a part of the transmission wave 40b is reflected by the bumper 9 and returns to the opposite side in the z-axis direction as a reflected wave 41. A part of the reflected wave 41 from the bumper 9 is reflected again on the second face 20b of the radome 20 and propagates as a re-reflected wave 42 from the radome 20 in the same z-axis direction as the transmission wave 40b. As a result, interference occurs between the transmission wave 40b and the re-reflected wave 42, and the target detection performance of the radar device 10 deteriorates.

In addition, the rest of the reflected wave 41 by the bumper 9 passes through the radome 20 and is reflected again by the antenna substrate 5. Since a re-reflected wave 43 from the antenna substrate 5 also propagates in the same z-axis direction as the transmission wave 40b, interference occurs between the transmission wave 40b and the re-reflected wave 43, and the target detection performance of the radar device 10 deteriorates.

As described above, the reflected wave 41 from the bumper 9 returns to the opposite side in the z-axis direction in the radar device 10 of the comparative example, so that each of the re-reflected waves 42 and 43 propagating in the same direction as the transmission wave 40b of the radar device 10 is generated in the radome 20 and the antenna substrate 5. As a result, characteristics of the radar device 10 deteriorate.

On the other hand, the radiated radio wave 40a radiated from the transmission antenna 3 to be inclined from the z-axis is refracted at the first face 2a and the second face 2b, which are the interfaces between the radome 2 and the air, at the time of passing through the radome 2, so that a propagation direction thereof is changed as described above in the radar device 1 of the present embodiment illustrated in FIG. 1. As a result, the transmission wave 40b from the radar device 1 is emitted in the z-axis direction. A part of this transmission wave 40b is reflected by the bumper 9 and returns to the opposite side in the z-axis direction as the reflected wave 41. A part of the reflected wave 41 from the bumper 9 is reflected again on the second face 2b of the radome 2, but the second face 2b has the angle with respect to the y-axis and is not parallel to the bumper 9, and thus, the re-reflected wave 42 from the radome 2 propagates in a direction shifted from the z-axis direction. As a result, no interference occurs between the transmission wave 40b and the re-reflected wave 42.

In addition, the rest of the reflected wave 41 from the bumper 9 is refracted at each of the second face 2b and the first face 2a to be changed in propagation direction at the time of passing through the radome 2 again, and reaches the antenna substrate 5 at an angle with respect to the z-axis. This propagation direction of the re-reflected wave 43 of the radio wave being reflected again by the antenna substrate 5 and the propagation direction of the radiated radio wave 40a from the transmission antenna 3 are symmetrical with respect to the z-axis. As a result, no interference occurs between the transmission wave 40b of the radiated radio wave 40a passing through the radome 2 and the re-reflected wave 43.

As described above, the re-reflected waves 42 and 43 reflected again by the radome 2 and the antenna substrate 5, respectively, propagate in the directions different from the transmission wave 40b emitted from the radar device 1 toward the target object in the radar device 1 of the present embodiment. Therefore, it is possible to avoid the interference with the transmission wave 40b and reduce the deterioration of the characteristics of the radar device 1.

According to the first embodiment of the present invention described above, the following operational effects are achieved.
(1) The radar device 1 mounted on the vehicle 100 includes: the transmission antenna 3 that radiates the radio wave toward the target object; the reception antenna 4 that receives the reflected wave of the radio wave radiated from the transmission antenna 3 and reflected by the object; the antenna substrate 5 that has the mounting face on which the transmission antenna 3 and the reception antenna 4 are mounted; and the radome 2 that covers the transmission antenna 3 and the reception antenna 4. The radome 2 is arranged between the bumper 9 of the vehicle 100 and the antenna substrate 5. The first face 2a of the radome 2 opposing the antenna substrate 5 and the second face 2b of the radome 2 opposing the bumper 9 have portions that are not parallel to each other. The transmission antenna 3 radiates the radio wave at the angle from the z-axis direction perpendicular to the mounting face of the antenna substrate 5. Thus, it is possible to prevent the interference between the radio wave emitted from the radar device 1 and the reflected wave, and to avoid the deterioration of the detection performance.
(2) In the radome 2, each of the angles of the first face 2a and the second face 2b with respect to the mounting face of the antenna substrate 5 is set such that the propagation direction of the transmission wave 40b, which is the radio wave radiated from the transmission antenna 3 and passed through the radome 2, is the z-axis direction substantially perpendicular to the mounting face of the antenna substrate 5. Thus, it is possible to secure the distance at which the radar device 1 can detect the target object and to prevent the deterioration of the detection performance.
(3) As illustrated in FIG. 1(a), the radome 2 has a trapezoidal cross-sectional shape in the up-down direction of the vehicle 100, that is, in the y-axis direction. Thus, the first face 2a and the second face 2b can be made not parallel to each other in the radome 2 with a simple structure that is easy to form.

Note that the example in which the cross-sectional shape of the radome 2 is the trapezoid as illustrated in FIG. 1 has been described in the first embodiment of the present invention described above, but the cross-sectional shape of the radome 2 in the present invention is not limited to the trapezoid. The cross-sectional shape of the radome 2 can be any shape as long as the first face 2a opposing the antenna substrate 5 and the second face 2b opposing the bumper 9 are formed in shapes having portions that are not parallel to each other such that at least a part of the second face 2b opposing the bumper 9 is not parallel to the y-axis and a propagation direction of the transmission wave 40b passing through the radome 2 of the radiated radio wave 40a radiated from the transmission antenna 3 at an angle with respect to the z-axis is substantially the same as the z-axis direction.

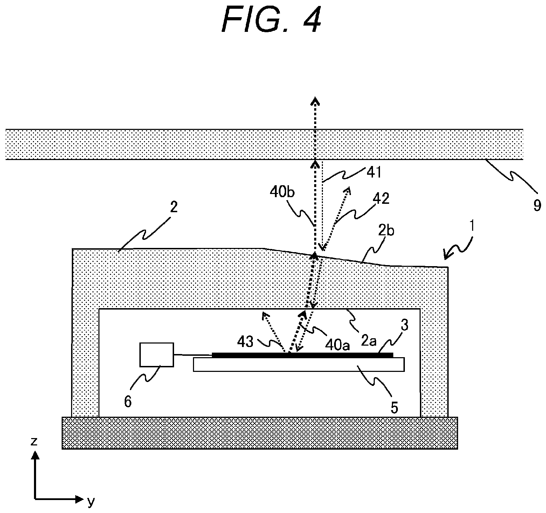

FIG. 4 is a view illustrating a modification of the radar device 1 according to the first embodiment of the present invention. FIG. 4 illustrates a cross-sectional view of the radome 2 having a cross-sectional shape different from that of FIG. 1(a) as the modification of the radar device 1 according to the present embodiment. In this modification, in the second face 2b opposing the bumper 9 in the radome 2, only a range through which the radiated radio wave 40a from the transmission antenna 3 passes has an angle with respect to the y-axis. Thus, it is possible to reduce the thickness of the radome 2 while exhibiting the same effects as described above.

In addition, a shape of the radome 2 may be set such that the first face 2a of the radome 2 opposing the antenna substrate 5 has an inclination with respect to the y-axis, that is, the mounting face of the antenna substrate 5. Thus, an angle difference between the second face 2b opposing the bumper 9 of the radome 2 and the y-axis can be made larger, and it is possible to further reduce the interference between the transmission wave 40b and the re-reflected wave 42 from the radome 2.

### (Second Embodiment)

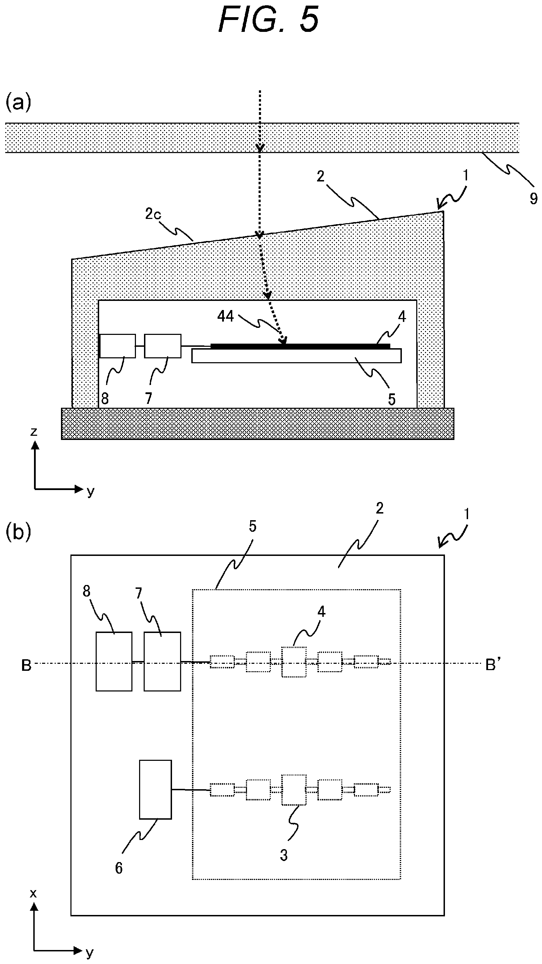

FIG. 5 is a view illustrating the radar device 1 according to a second embodiment of the present invention. FIG. 5(a) is a cross-sectional view taken along line B-B' of the radar device 1 according to the present embodiment, and FIG. 5(b) is a perspective plan view of the radar device 1 according to the present embodiment. In the radar device 1 of the present embodiment, a radiation direction of the radiated radio wave 40a from the transmission antenna 3, described with reference to FIG. 1 in the first embodiment, and an incident direction of a reception wave 44 when a reflected wave from a target object passes through the radome 2 and is incident on the reception antenna 4 have angles different from each other.

Further, a cross-sectional shape of the radome 2 is different between a position directly above the transmission antenna 3 and a position directly above the reception antenna 4 in the radar device 1 of the present embodiment. Specifically, the cross-sectional shape is the same as that illustrated in FIG. 1(a) in the first embodiment at the position directly above the transmission antenna 3, and is a cross-sectional shape illustrated in FIG. 5(a) at the position directly above the reception antenna 4. As a result, on the second face 2b of the radome 2 opposing the bumper 9 at the position directly above the transmission antenna 3 and on a second face 2c of the radome 2 opposing the bumper 9 at the position directly above the reception antenna 4, inclination directions of these faces with respect to a mounting face of the antenna substrate 5 are different from each other. Note that it is preferable to set an inclination angle of the second face 2c at the position directly above the reception antenna 4 with respect to the y-axis such that a gain of the reception antenna 4 is maximized in the incident direction of the reception wave 44.

As described above, the cross-sectional shape of the radome 2 is different between the position directly above the transmission antenna 3 and the position directly above the reception antenna 4 in the radar device 1 of the present embodiment. As a result, the radiation direction of the radiated radio wave 40a from the transmission antenna 3 and the incident direction of the reception wave 44 when the transmission wave 40b is reflected by the target object and is incident on the reception antenna 4 can have the angles different from each other at the time of setting a propagation direction of the transmission wave 40b from the radar device 1 to the z-axis direction. As a result, a coupling between the transmission antenna 3 and the reception antenna 4 can be reduced, and thus, the deterioration of the detection performance of the radar device 1 due to the coupling between the antennas can be reduced.

According to the second embodiment of the present invention described above, the transmission antenna 3 and the reception antenna 4 are arranged side by side in a direction horizontal to a road surface on which the vehicle 100 travels on the mounting face of the antenna substrate 5. The radome 2 has the different inclination directions of the second faces 2b and 2c with respect to the mounting face of the antenna substrate 5 at the position directly above the transmission antenna 3 and the position directly above the reception antenna 4. Thus, the coupling between the transmission antenna 3 and the reception antenna 4 can be reduced, and the deterioration of the detection performance of the radar device 1 can be further suppressed.

Note that the example in which the cross-sectional shape of the radome 2 is made different between the position directly above the transmission antenna 3 and the position directly above the reception antenna 4 has been described in the second embodiment of the present invention described above, but the cross-sectional shape of the radome 2 in the present invention is not limited thereto. The cross-sectional shape of the radome 2 can be any shape as long as the radiation direction of the radiated radio wave 40a from the transmission antenna 3 and the incident direction of the reception wave 44 when the transmission wave 40b is reflected by the target object and is incident on the reception antenna 4 can have angles different from each other at the time of setting the propagation direction of the transmission wave 40b from the radar device 1 to the z-axis direction.

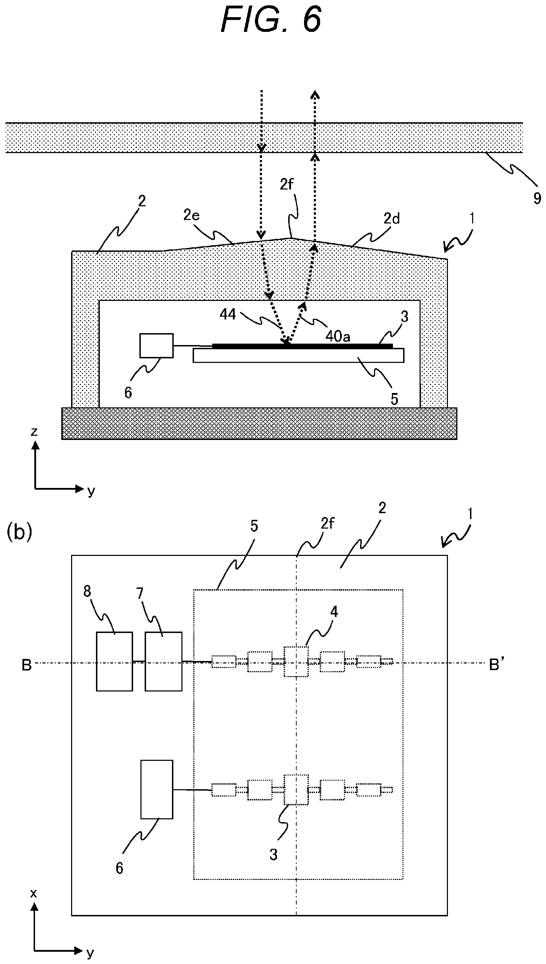

FIG. 6 is a view illustrating a modification of the radar device 1 according to the second embodiment of the present invention. FIG. 6 illustrates a cross-sectional view of the radome 2 having a cross-sectional shape different from that of FIG. 5(a) as the modification of the radar device 1 according to the present embodiment. In this modification, on a second face 2d of the radome 2 opposing the bumper 9 in a range through which the radiated radio wave 40a from the transmission antenna 3 passes and on a second face 2e of the radome 2 opposing the bumper 9 in a range through which the reception wave 44 incident on the reception antenna 4 passes, inclination directions of these faces with respect to a mounting face of the antenna substrate 5 are different from each other with a center line 2f of the transmission antenna 3 and the reception antenna 4 in the x-axis direction as a boundary. Thus, a cross-sectional shape of the radome 2 can be made the same in the x-axis direction while exhibiting the same operational effects as described above, so that the radome 2 can be easily formed.

Note that a boundary line between the second faces 2d and 2e is not necessarily the center line 2f of the transmission antenna 3 and the reception antenna 4 in the modification described with reference to FIG. 6. Any boundary line can be set for the second faces 2d and 2e along a direction in which the transmission antenna 3 and the reception antenna 4 are arranged as long as inclinations of the second faces 2d and 2e of the radome 2 opposing the bumper 9 can be made different between the range through which the radiated radio wave 40a from the transmission antenna 3 passes and the range through which the reception wave 44 incident on the reception antenna 4 passes.

The above-described respective embodiments and various modifications are merely examples, and the present invention is not limited to these contents unless the features of the invention are impaired. In addition, the various embodiments and modifications have been described as above, but the present invention is not limited to these contents. Other aspects that can be considered within the scope of the technical ideas of the present invention are also included in the scope of the present invention.

The disclosed content of the following priority application is incorporated herein as the citation.

Japanese Patent Application No. 2019-156929 (filed on August 29, 2019)

### Reference Signs List

- 1: radar device
- 2: cover (radome)
- 2a: first face
- 2b, 2c, 2d, 2e: second face
- 2f: center line
- 3: transmission antenna
- 4: reception antenna
- 5: antenna substrate
- 6: transmission circuit
- 7: reception circuit
- 8: signal processing circuit
- 9: bumper

## Claims

1. A radar device, mounted on a vehicle, comprising:
a transmission antenna that radiates a radio wave toward an object;
a reception antenna that receives a reflected wave of the radio wave radiated from the transmission antenna and reflected by the object;
an antenna substrate that has a mounting face on which the transmission antenna and the reception antenna are mounted; and
a radome that covers the transmission antenna and the reception antenna,
wherein the radome is arranged between a bumper of the vehicle and the antenna substrate,
a first face of the radome opposing the antenna substrate and a second face of the radome opposing the bumper have portions that are not parallel to each other, and
the transmission antenna radiates the radio wave at an angle inclined from a direction perpendicular to the mounting face.

2. The radar device according to claim 1, wherein in the radome, each of angles of the first face and the second face with respect to the mounting face are set such that a propagation direction of the radio wave radiated from the transmission antenna and passed through the radome is a direction substantially perpendicular to the mounting face.

3. The radar device according to claim 1 or 2, wherein the radome has a trapezoidal cross-sectional shape in an up-down direction of the vehicle.

4. The radar device according to claim 1 or 2, wherein
the transmission antenna and the reception antenna are arranged side by side on the mounting face of the antenna substrate in a direction horizontal to a road surface on which the vehicle travels, and
the radome has different inclination directions of the second face with respect to the mounting face of the antenna substrate at a position directly above the transmission antenna and a position directly above the reception antenna.

5. The radar device according to claim 1 or 2, wherein
the transmission antenna and the reception antenna are arranged side by side on the mounting face of the antenna substrate in a direction horizontal to a road surface on which the vehicle travels, and
the radome has different inclination directions of the second face with respect to the mounting face of the antenna substrate, with a boundary line along the direction in which the transmission antenna and the reception antenna are arranged as a boundary.
